# FASCICULE DE BREVET EUROPEEN

(11) **EP 3 589 982 B1**
(45) Date de publication et mention de la délivrance du brevet: **04.10.2023**
(21) Numéro de dépôt: 18706760.8
(22) Date de dépôt: 28.02.2018
(51) Int. Cl.: G01T 1/16, H04N 5/30, H04N 5/32

(54) **CIRCUIT D'ACQUISITION ANALOGIQUE DE SIGNAUX PROVENANT DE RADIATIONS ET APPAREIL DE PRODUCTION D'UNE IMAGE REPRESENTATIVE DE CES RADIATIONS**
ANALOGE SCHALTUNG ZUR ERFASSUNG VON SIGNALEN AUS STRAHLUNG UND VORRICHTUNG ZUR ERZEUGUNG EINES BILDES ZUR DARSTELLUNG DIESER STRAHLUNG
ANALOG CIRCUIT FOR ACQUIRING SIGNALS ARISING FROM RADIATION AND DEVICE FOR PRODUCING AN IMAGE REPRESENTATIVE OF THIS RADIATION

(30) Priorité: 28.02.2017 FR 1751641
(43) Date de publication de la demande: 08.01.2020
(73) Titulaire: Institut Mines Telecom, 75014 Paris (FR); Centre National de la Recherche Scientifique (CNRS), 75016 Paris (FR); Université Clermont Auvergne, 63000 Clermont-Ferrand (FR); Université Claude Bernard Lyon 1, 69100 Villeurbanne (FR)
(72) Inventeur: ABALINE, Mounir, 74000 Annecy (FR); CHANAL, Hervé, 63270 Vic le Comte (FR); CUSSONNEAU, Jean-Pierre, 49530 Lire (FR); DAHOUMANE, Mokrane, 69150 Decines-Charpieu (FR); GALLEGO MANZANO, Lucia, 44100 Nantes (FR); LEMAIRE, Olivier, 92120 Montrouge (FR); MANEN, Samuel, 63111 Dallet (FR); MATHEZ, Hervé, 69580 Sathonay-Village (FR); MORTEAU, Eric, 49600 La Chaussaire (FR); PILLET, Nicolas, 63000 Clermont-Ferrand (FR); THERS, Dominique, 44119 Treillières (FR); VANDAELE,Richard, 03400 Yzeure (FR)
(74) Mandataire: Cabinet Nony
(86) Numéro de dépôt international: PCT/EP2018/054930
(87) Numéro de publication internationale: WO 2018/158315

(56) Documents cités:
- WO-A1-2004/111682
- US-A- 5 378 893
- US-A1- 2010 025 589
- US-A1- 2010 320 390
- US-B1- 8 921 796

## Description

### 1. DOMAINE DE L'INVENTION

Le domaine de l'invention est celui de la détection de radiations 3y provenant d'un objet particulier et la réalisation d'une imagerie 3y représentative de leurs points d'émissions. L'appareil d'acquisition comporte notamment des circuits intégrés analogiques détectant la réception d'une radiation et enregistrant son amplitude et son instant de réception dans une mémoire analogique qui est lu ensuite par un système informatique.

### 2. ARRIÈRE-PLAN TECHNOLOGIQUE

Dans le domaine de la physique expérimentale, il est nécessaire de disposer d'instruments de mesure pour appréhender de nouvelles observations où les limites de nos connaissances sont testées. Dans le domaine médical, il est connu d'inoculer chez des patients des substances se fixant dans certains endroits du corps et émettant des radiations. La détection des radiations permet de déterminer leurs points d'émission et ainsi de calculer une image des organes fixant ces substances. De telles techniques sont utilisées par exemple en scintigraphie osseuse, appelée également gammagraphie. Ce procédé d'examen permet de repérer dans l'organisme un produit émetteur de rayon gamma qui se fixe sur les os. La substance inoculée chez le patient détermine le type de radiations que le système d'imagerie médicale doit détecter et faire apparaître aux praticiens de la santé sous la forme d'une image éventuellement tridimensionnelle. Dans le cas de la scintigraphie osseuse, on utilise généralement la substance appelée : méthylène diphosphonate MDP - étroitement couplée à un isotope, qui est un émetteur de rayon gamma, le technétium 99. Cette substance se fixe électivement sur les os. Elle est notamment utilisée pour identifier des métastases osseuses du cancer de la prostate. D'autres substances radiantes sont utilisées de nos jours.

Pour des raisons évidentes de sécurité, il est nécessaire de minimiser au maximum la dose de radiations administrées au patient. Ceci conduit à détecter des radiations de moins en moins énergétiques, et dont l'émission dure de moins en moins longtemps. De plus pour le confort du patient, il est souhaitable de réduire autant que possible le temps de l'examen, c'est à dire la durée au cours de laquelle le patient est immobile.

Autour de ces objectifs, une nouvelle technique d'imagerie médicale a été développée, baptisée imagerie à 3 photons. L'imagerie à 3 photons est basée sur deux nouveaux concepts : l'utilisation conjointe d'une nouvelle technologie de caméra, un télescope Compton au xénon liquide, et d'un nouveau médicament radioactif basé sur le ^{44g}Sc. Le choix du xénon liquide sera expliqué par la suite, rappelons que cet élément chimique porte le numéro atomique 54, de symbole Xe et qu'il est classé dans les gaz rares. Le principe de l'imagerie à 3 photons est basé sur l'utilisation d'un isotope radioactif spécifique, le ⁴⁴Sc, qui émet un positon (ou « positron » en Anglais) un photon d'énergie 1,157 MeV en coïncidence spatiale et temporelle. Après l'annihilation du positon avec un électron rencontré à l'intérieur du corps du patient, deux photons y d'énergie 511 keV sont émis à 180° l'un de l'autre. La détection simultanée de ces deux photons permet de tracer une ligne entre les deux interactions. Cette ligne est appelée ligne de réponse (LOR). L'imagerie à 3 photons a pour but de localiser directement la position des sources d'émission dans les trois dimensions (3D), pour chacune des désintégrations mesurées, grâce à l'intersection entre la LOR et un cône Compton. Ce cône est obtenu suite à l'interaction du photon d'énergie 1.157 MeV émis lors de la décroissance du ^{44g}Sc avec un télescope Compton. L'information additionnelle apportée par ce troisième photon permet de localiser la position de l'émetteur le long de la LOR et ainsi d'obtenir la distribution de la source en 3D. Le bénéfice de cette nouvelle technique s'exprime directement en termes de réduction du nombre de désintégrations nécessaires pour l'obtention de l'image. Le temps des examens et/ou la quantité de substance inoculée au patient se voient ainsi diminués.

Les caméras Compton au xénon liquide semblent les mieux adaptées pour fournir les meilleurs résultats pour l'imagerie 3γ. Le choix du xénon liquide comme milieu de détection est motivé par le fait que les techniques de détection disponibles actuellement en imagerie, basées sur les cristaux scintillateurs pour la détection des photons γ, ne sont pas adaptées pour l'imagerie à 3 photons. Par ailleurs, les propriétés physiques fondamentales du xénon liquide, haute densité et son numéro atomique élevé, confèrent un pouvoir d'arrêt élevé aux rayonnements ionisants, ce qui fait le xénon liquide un très bon candidat en tant que détecteur de rayons γ dans la gamme d'énergie allant de quelques dizaines de keV à plusieurs dizaines de MeV. Le xénon liquide est à la fois un excellent milieu actif pour la détection de rayonnements ionisants et un excellent scintillateur, avec l'avantage de rendre possible la construction de détecteurs de grande taille avec un milieu sensible homogène. Ce sont les principales raisons pour lesquelles le xénon liquide a été choisi comme milieu de détection, non seulement pour l'imagerie médicale, mais aussi dans d'autres domaines tels que la physique des particules et l'astrophysique.

Malgré ces avantages, le xénon liquide présente l'inconvénient de n'exister sous cette forme qu'à très basse température, son point d'ébullition étant à -108,09°C. La réalisation d'une caméra Compton au xénon liquide à phase unique pour l'imagerie 3γ nécessite donc des composants spécifiques utilisables à des températures avoisinant les-100°C. De plus, l'émission d'une radiation 3γ est extrêmement courte et nécessite des détecteurs hyper rapides. Pour obtenir une véritable imagerie d'un patient, avec une bonne précision, il est nécessaire d'utiliser de nombreux détecteurs. Ces contraintes entraînent une très grande quantité de données à traiter. Prenons par exemple, une caméra dotée de 20000 détecteurs environ, chacun ayant un temps de réponse de l'ordre de 25 nasosecondes, la quantité d'information produite au cours d'un examen de 20 minutes est de l'ordre de 1500 téraoctets. Une telle quantité de données nécessite une très grosse puissance de calcul et le temps de traitement impose d'avoir les résultats de l'examen qu'après un temps très long (de l'ordre de la journée), ce qui ne permet pas à un praticien de fournir une analyse des résultats juste après l'examen du patient.

Un des objectifs de la présente demande est de proposer une caméra capable de détecter des radiations 3γ provenant d'un volume comparable à celui d'un corps humain et de traiter en temps réel le maximum d'information provenant des détecteurs pour minimiser le temps de traitement en vue de produire une imagerie 3γ. La caméra doit donc être dotée d'une architecture spécifique permettant de fournir une image du patient dans un temps acceptable pour le praticien et être dotée de circuits spécifiques fonctionnant dans l'environnement du xénon liquide.

### 3. EXPOSÉ DE L'INVENTION

Dans un mode de réalisation particulier de l'invention, il est proposé un circuit intégré de détection de radiations selon la revendication 1.

De cette manière, le circuit intégré peut détecter des radiations d'une durée très courte, et traiter les signaux très rapidement au niveau analogique avant de les transmettre au système informatique qui fournit une image 3D.

Selon un mode particulier de réalisation, le bloc de filtrage et de mémorisation, dit « circuit CFD » comporte notamment :
- un filtre à retard,
- un premier comparateur,
- un atténuateur à pont diviseur,
le signal provenant des détecteurs de radiations étant transmis à la fois au filtre de retard pour produire un signal retardé et à l'atténuateur pour produire un signal atténué, le signal retardé et le signal atténué étant transmis au premier comparateur qui produit un signal indiquant que la tension entre ces signaux électriques change de polarité, ledit signal étant utilisé pour produire le signal de détection.

Selon un autre mode particulier de réalisation, le circuit CFD comporte un second comparateur qui compare la tension émise par un détecteur de radiations à une tension de référence, le circuit CFD comportant également une porte ET dont une entrée reçoit le signal émis par le premier comparateur, la porte ET émettant le signal de détection indiquant que la tension entre ces signaux électriques change de polarité et que la tension émise par les détecteurs est supérieure à la tension de référence.

Selon un autre mode particulier de réalisation, le filtre à retard est constitué d'un filtre de Bessel du 2ème ordre avec un retard de 25 nanosecondes au minimum, 600 nanosecondes de préférence.

Selon un autre mode particulier de réalisation, le circuit intégré de détection de radiations comporte un circuit dit « ATBM » comportant des éléments de mémorisation des signaux de détection et émettant sur le port de sortie et sous le contrôle de signaux de lecture reçus d'un circuit extérieur les signaux analogiques mémorisés des voies pour lesquelles une radiation est détectée.

Selon un autre mode particulier de réalisation, le circuit intégré comporte un premier multiplexeur recevant sur chaque entrée les signaux mémorisées d'amplitude du signal en entrée du circuit et un second multiplexeur recevant sur chaque entrée les signaux mémorisés d'information temporelle, les sorties des deux multiplexeurs émettant vers le port de sortie les signaux analogiques de l'amplitude et de l'information temporelle associée à une radiation détectée.

Dans un autre mode de réalisation particulier de l'invention, il est proposé un appareil de production d'une image constituée de points représentatifs des positions d'émission de radiations émanant d'un volume donné, comportant une pluralité de détecteurs délivrant chacun un signal de mesure dont l'amplitude varie lors de la détection d'une radiation, des moyens de conversion analogique / numérique desdits signaux de mesure, et d'une unité centrale traitant les données converties pour produire une image représentant les points d'émission desdites radiations. L'appareil de production comporte une pluralité de circuits intégrés de détection de radiations décrits selon l'un quelconque des paragraphes précédente. Les voies d'entrée de ces circuits intégrés sont connectées auxdits détecteurs, les signaux de déclenchement émis par lesdits circuits intégrés activant la conversion en numérique au sein desdits moyens de conversion des signaux analogiques mémorisés présents sur les ports de sorties.

De cette manière, l'appareil de production d'imagerie peut détecter des radiations d'une durée très courte, et les traiter afin de fournir une image 3D en un temps minimal.

Dans un autre mode de réalisation particulier de l'invention, il est proposé un appareil pour la production d'une image 3γ comportant une pluralités de circuits intégrés de détection de radiations 3γ émanant d'un volume donné.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente un schéma de principe de l'émission de photon 3γ détectable par la technique d'imagerie développée dans le cadre de la présente demande ;
- la figure 2 présente une installation d'imagerie 3γ pour l'analyse médicale de patients selon un exemple d'application,
- la figure 3 présente les principaux composants électroniques d'une caméra 3y selon un exemple de réalisation,
- la figure 4 présente un design d'un circuit analogique d'acquisition de signaux selon un prototype de réalisation,
- la figure 5 représente un schéma synoptique montrant le fonctionnement des principaux modules du circuit analogique d'acquisition selon un exemple de réalisation,
- la figure 6 représente un exemple d'un synoptique général d'un bloc CFD équipant un circuit analogique d'acquisition,
- la figure 7 présente un chronogramme des différents signaux présents dans certains points du bloc CFD,
- la figure 8 représente un schéma synoptique d'un bloc du générateur de rampe selon un exemple de réalisation,
- la figure 9 illustre l'architecture retenue pour l'implémentation des blocs mémoires analogiques équipant un exemple de circuit analogique d'acquisition,
- la figure 10 représente un schéma synoptique d'un bloc de logique combinatoire inséré dans chaque cellule mémoire et contrôlant l'écriture et la lecture de cette mémoire.

### 5. DESCRIPTION DÉTAILLÉE

Sur toutes les figures du présent document, les éléments identiques sont désignés par une même référence numérique.

### 5.1 Principe de l'imagerie 3γ

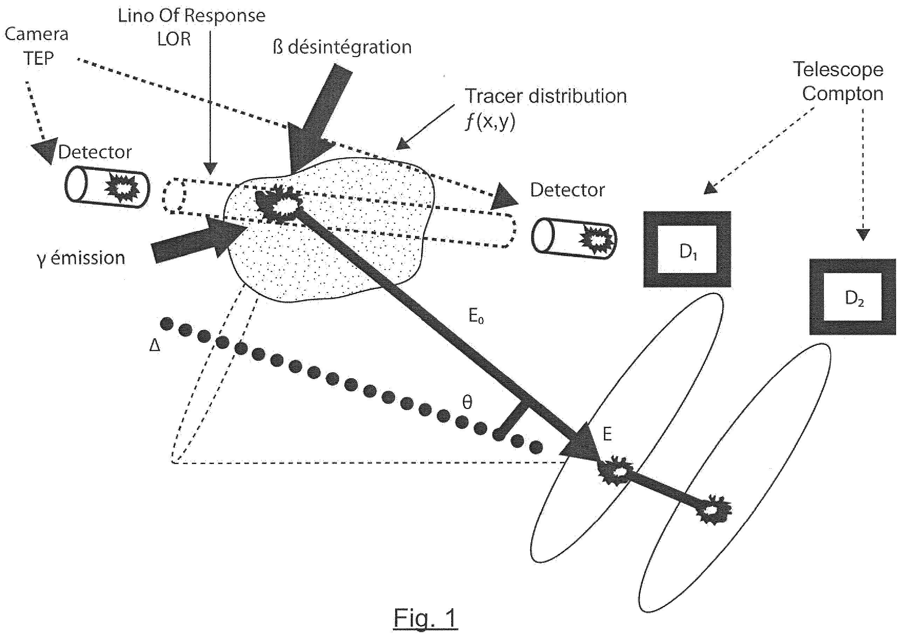

La **Fig. 1** présente un schéma de principe de l'émission de photons 3γ détectables par la technique d'imagerie développée dans le cadre de la présente demande. Ce principe d'imagerie repose sur l'utilisation d'une caméra de type « Compton » ou caméra 3γ capable de détecter des photons émis en coïncidence temporelle et spatiale avec la position habituellement détectée en imagerie fonctionnelle TEP (acronyme de « Tomoscintigraphie par Emission de Positons », ou PET en langue Anglo-saxonne). La détermination de trajectoire du photon supplémentaire permet de déterminer la position dans les trois dimensions du marqueur à l'origine de ces émissions en coïncidence. En effet, l'imagerie Compton permet de localiser le lieu du point d'émission d'un photon sur un cône creux d'axe Δ et d'ouverture angulaire 8, et la caméra TEP permet de localiser le lieu du point d'émission du positon sur un segment. Lorsque les lieux d'émission du positon et du photon sont considérés comme identiques, le lieu du point d'émission est déterminé dans les 3 dimensions. Les coordonnées de ce point sont la solution de l'intersection géométrique du cône et du segment de réponse (solution d'une équation du second degré ne comportant qu'une solution physique dans le champ de vue dans la plupart des cas). Le fait qu'il existe une faible proportion de cas à rejeter nécessite un traitement informatique qui ne peut s'effectuer par des circuits analogiques. Il est donc nécessaire d'effectuer le maximum de traitement par des circuits analogiques, de façon à réduire autant que possible le travail informatique réalisé par l'unité centrale chargé de produire l'imagerie 3γ.

### 5.2 Présentation de la caméra 3γ

Une caméra 3γ comprend typiquement des moyens de détection des radiations 3γ, ou tout phénomène physique décelable à l'aide de détecteurs (radiation 3γ, rayon gamma, rayon X, ...) , et des moyens de collection de charges provenant desdits détecteurs, ainsi qu'un infrastructure cryogénique conçue pour liquéfier et maintenir le xénon dans des conditions de température et de pression stables pendant de longues périodes d'acquisition. La caméra 3γ prototypée possède une forme cylindrique, contient typiquement 200 kg environ de xénon liquide et est équipée de 20480 détecteurs de photon 3γ. Ces valeurs ne sont données qu'à titre d'exemple et ne sont aucunement limitatives, la géométrie de la caméra 3γ prototypée a été optimisée de façon à fournir une couverture complète pour l'observation de petits animaux grâce à son champ de vue axiale de 24 centimètres.

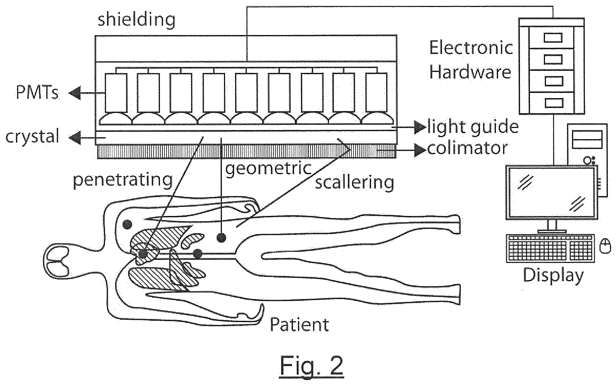

La **Fig. 2** présente une installation d'imagerie 3γ pour l'analyse médicale de patients. Ce dernier est allongé sur une table d'auscultation et un praticien lui injecte dans le sang une substance émettant des radiations 3γ. La caméra qui est au-dessus de lui, comporte une plaque de collimation surmontée de guides d'onde permettant de focaliser les émissions vers les détecteurs. La caméra dispose également d'un équipement cryogénique pour le maintien à basse température du xénon liquide et d'un système d'acquisition de données rapide et performant, afin de présenter au praticien une image 3y de son patient, peu de temps après l'examen.

L'effet Compton se caractérise notamment par le fait que l'amplitude des signaux résultant d'un événement physique tel qu'une radiation, est proche du niveau du bruit, dans un rapport de 1 à 3. En prenant en compte ce seuil assez bas, l'expérimentation a montré que le taux de déclenchement attendu est au maximum de l'ordre de 4096 radiations détectées par seconde et par pixel, soit un événement physique toutes les 7,6 µs. Ces contraintes ont été prises en compte dans la caractérisation de la caméra qui va être maintenant décrite.

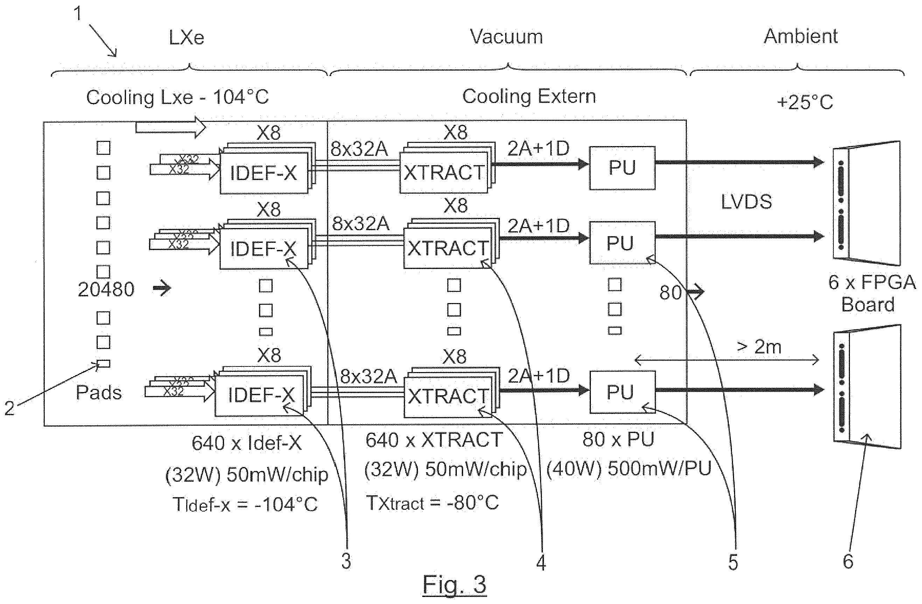

On présente maintenant, en relation avec la **Fig. 3****,** les principaux composants électroniques de la caméra 3γ. La caméra 1 comporte typiquement :
- une pluralité de détecteurs 2 fournissant un signal électrique dont l'amplitude augmente lors de la détection d'une radiation 3γ. Le prototype réalisé en compte 20480.
- une pluralité de circuits 3 de collecte et de mise en forme des signaux provenant de chaque détecteur, ces circuits sont appelés IDEF-X. On en compte 640 répartis en 80 blocs de 8 circuits intégrés,
- une pluralité de circuits analogiques 4 d'acquisition des signaux analogiques dont chaque voie d'entrée est connectée à une voie de sortie des circuits de collecte et de mise en forme, ces circuits sont appelés XTRACT. Dans le prototype réalisé, on en compte 640 répartis en 80 blocs de 8 circuits intégrés,
- une pluralité de cartes électroniques 5 de lecture et de conversion analogique numérique (A/D), ces cartes sont appelées PU. On en compte 80 dans le prototype réalisé,
- au moins une unité centrale 6 comportant une mémoire stockant les données numériques et traitant lesdites données pour produire une image représentant une image en 3D des points d'émission desdites radiations.

Du fait de l'environnement de détection des radiations (utilisation du xénon liquide), les détecteurs et les circuits de collecte sont placés dans un environnement à-104°C, les circuits d'acquisition des signaux analogiques et les circuits électronique de lecture et de conversion analogique numérique sont placés dans un environnement à-80°C, l'unité centrale est placée à température ambiante.

Les détecteurs de radiations 3γ ainsi que les circuits IDEF-X sont classiques en soi. Le circuit XTRACT comporte notamment un grand nombre d'innovations qui vont être maintenant décrites.

### 5.3 Description du circuit d'acguisition analogique XTRACT

Le circuit XTRACT 4 réalisé pour le prototype est fabriqué selon la technologie ASIC. La principale fonction de ce circuit est d'exécuter un traitement de signal sur les signaux provenant des circuits IDEF-X et de soulager ainsi le travail informatique de l'unité centrale 6. Dans le prototype réalisé, le circuit XTRACT traite 32 voies en parallèle, dans un environnement de -80°C environ. Sa consommation est limitée à 50mW sous une alimentation de 3.3V.

Les principales opérations que doit effectuer XTRACT sont les suivantes :
- Auto-déclenchement indépendant de chaque voie sur niveau de seuil du signal d'entrée.
- Mémorisation de l'amplitude de l'événement physique et d'une information temporelle caractéristique de l'instant au cours duquel cet événement est détecté.
- Enregistrement du numéro de la voie touchée.
- Multiplexage en sortie de plusieurs XTRACT (x8) pendant la phase de lecture.
- Une interface I2C permettant la configuration à distance de chaque circuit XTRACT et le test du circuit.

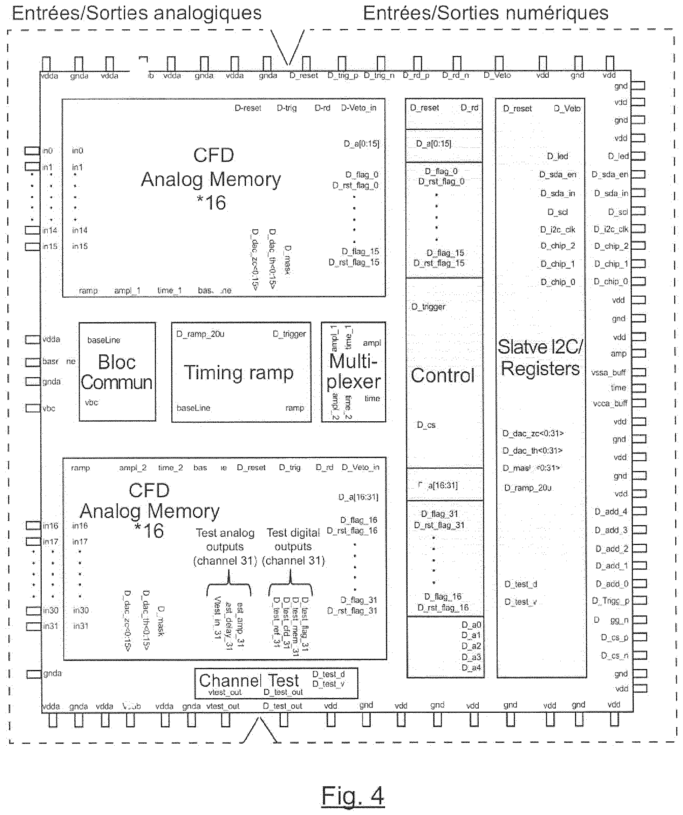

Le design du circuit prototypé, représenté à la **Fig. 4** montre la présence de 2 blocs analogiques de 16 voies chacun comprenant la discrimination à fraction constante (CFD) et les mémoires analogiques (Analog Memory), des éléments communs aux 32 voies (Bloc Commun, Timing ramp, Multiplexer), un bloc de Control pilotant de manière asynchrone le séquencement d'écriture et de lecture de chaque voie de lecture, et un bloc pour la configuration du circuit via une interface I2C (Slave I2C).

Pour éviter la génération d'interférences qui augmenteraient le niveau du bruit et gêneraient la détection, la mesure et la mémorisation des évènements physiques, les parties du circuit XTRACT utilisés pour l'acquisition et le traitement des signaux n'ont pas besoin d'horloge pour fonctionner. Cette contrainte oblige à concevoir une nouvelle architecture de circuit intégré qui va maintenant être décrite.

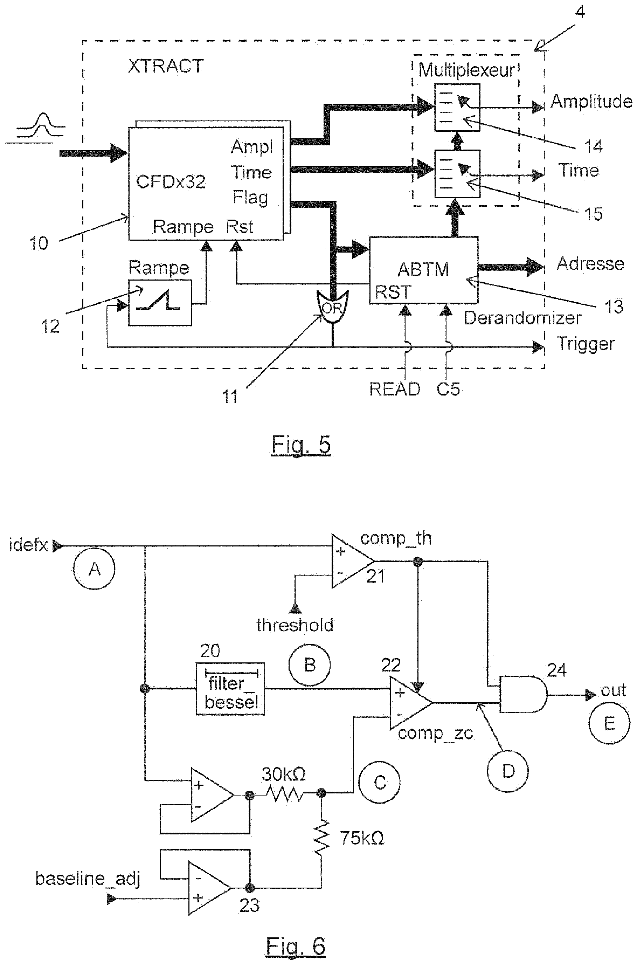

La **Fig. 5** représente un schéma synoptique montrant le fonctionnement des principaux modules de l'EXTRACT utilisés pour l'acquisition et le traitement des signaux. Le bloc pour la configuration du circuit via l'interface I2C n'est pas actif lors de l'utilisation du circuit et n'est pas représenté sur cette figure.

Le circuit intégré XTRACT comporte au moins les blocs suivants :
- bloc 10 de filtrage et de mémorisation. Le prototype réalisé d'EXTRACT comporte deux blocs traitant chacun 16 voies d'entrée analogique,
- bloc de génération du signal de déclenchement 11. Ce bloc est composé d'une porte OU à 32 entrées et produit le signal de déclenchement spécifique à cet EXTRACT,
- générateur 12 d'un signal électrique dont la tension évolue en forme de rampe,
- ATBM 13 (acronyme de « *Asynchronous Tree Binary Multiplexer* »)*,*
- multiplexeur 14 du signal de sortie du temps, c'est un circuit à 32 entrées dans le prototype réalisé,
- multiplexeur 15 du signal d'amplitude de la radiation 3y détectée, c'est également un circuit à 32 entrées.

Ces différents blocs sont connectés entre eux par des liaisons électriques et émettent et/ou reçoivent des signaux de l'extérieur de l'EXTRACT.

Le bloc de filtrage et de mémorisation 10 reçoit les signaux de 32 détecteurs d'évènements physiques, via le circuit IDEF-X. Pour chaque entrée, le bloc 10 comporte un bloc de type CFD (acronyme de « Discriminateur à Fraction Constante »), deux mémoires analogiques et un circuit amplificateur de signal.

### 5.4 Description du bloc CFD

L'utilisation d'un bloc CFD avec une valeur de retard importante est considérée comme particulièrement innovante compte tenu de l'état de la technique. Le rôle du bloc CFD est de délivrer un signal de détection à l'instant précis où le signal analogique d'entrée atteint son amplitude maximale, ce signal signifiant qu'un événement physique vient d'être émis et détecté. Rappelons qu'un événement physique est considéré comme détecté lorsque le détecteur émet un signal supérieur à au moins trois fois le niveau du bruit, ce rapport de trois étant ajustable. Le signal de déclenchement délivré par le bloc CFD contrôle la mémorisation de l'amplitude du signal lors de son extrémum et la mémorisation de l'information temporelle.

Le synoptique général du bloc CFD, présenté à la **Fig.6****,** comporte les éléments suivants :
- un filtre à retard 20 basé sur un filtre de Bessel du 2ème ordre,
- deux comparateurs 21 et 22,
- un atténuateur à pont diviseur 23,
- une porte ET 24.

Le filtre de Bessel, également appelé filtre de Thompson, est un circuit procurant un retard à un signal donné, il est particulier en ce que toutes les fréquences composant ce signal sont retardées selon un délai constant. Le filtre de Bessel permet donc de minimiser la distorsion que subit un signal complexe lors d'une opération de filtrage.

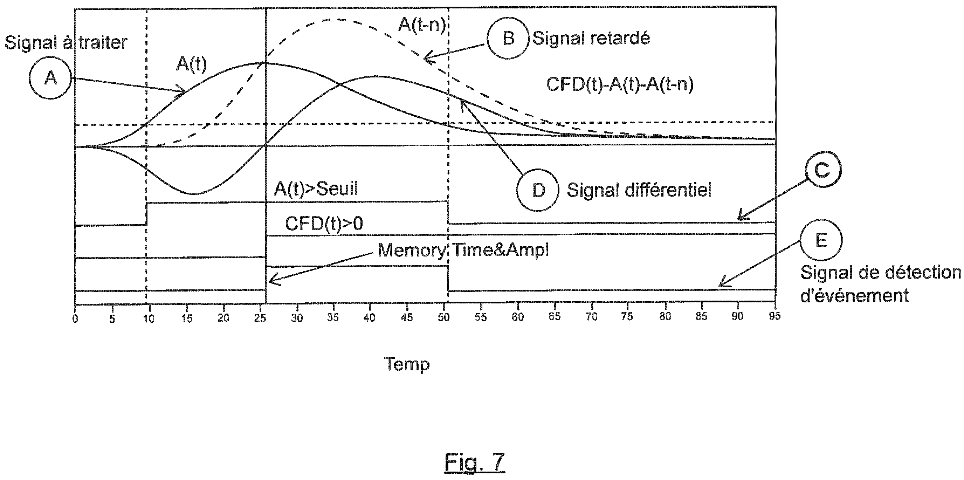

Le signal d'entrée fourni par le circuit IDEF-X est comparé à une tension de seuil (entrée appelée « threshold » selon la terminologie Anglo-saxonne) à l'aide du comparateur 21. Le signal en sortie de ce comparateur passe au niveau haut si le seuil est dépassé et arme alors le comparateur 22. Le signal d'entrée est également transmis à l'entrée du filtre de Bessel et à l'entrée d'un pont diviseur 23 à résistances et amplificateur opérationnel, le pont diviseur effectuant une atténuation du signal de 30 % environ. Le filtre de Bessel assure un retard du signal d'au moins 25 nanosecondes, un retard de 600 nanosecondes ayant été choisi pour le prototype. Le signal atténué provenant de l'atténuateur 23 et le signal en sortie du filtre de Bessel 20 sont envoyés aux entrées -, respectivement +, du comparateur 22 appelé « Zéro Crossing », ce qui signifie : détection de passage par « 0 ». La **Fig. 7** présente en fonction du temps les évolutions des différents signaux présents dans les points A, B, C, D et E du circuit ainsi référencés sur la **Fig. 6****.**

Le signal en sortie du comparateur 22 (noté « D » sur les **Fig. 6** et **7**) passe par 0 lorsque le signal atténué par l'atténuateur 23 (noté « C » sur les **Fig. 6** et **7**) et le signal en sortie du filtre de Bessel 20 (noté « B » sur les **Fig. 6** et **7**) se rejoignent et que la tension entre ces deux signaux électriques change de polarité. Le signal à l'entrée - du comparateur étant atténué, le comparateur ne peut pas être saturé par des signaux d'amplitude maximale présents à ces deux entrées. Le signal en sortie de ce comparateur 22 (noté « D » sur les **Fig. 6** et **7**) et le signal en sortie du comparateur 21 sont connectés aux deux entrées de la porte logique ET 24 qui fournit en sortie un signal logique (noté « E » sur les **Fig. 6** et **7**) passant de 0 à 1 à l'instant précis du passage par zéro des deux courbes, cet instant étant celui de la détection d'un évènement physique. Ce signal en sortie de la porte ET retombe à 0 lorsque la signal d'entrée (noté « A » sur les **Fig. 6** et **7**) repasse en-dessous de la valeur « Threshold »), cette valeur étant représentée par une ligne horizontale en pointillé sur la **Fig. 7****.** Les sorties de chaque porte ET du bloc 10 de filtrage et de mémorisation associée à chaque voie d'entrée émettent les signaux de détections.

On constate donc que chaque bloc CFD délivre en sortie un signal logique de détection d'un évènement physique, ce signal de détection contrôle la mémorisation de d'amplitude et de temps. La tension de seuil Threshold est typiquement fournie par un DAC 6 bits sur une gamme de ±43mV. Le niveau DC en entrée du comparateur Zéro Crossing est également ajustable par un DAC du même type. Cette fonctionnalité permet de compenser les variations de niveau DC introduites par les tension de décalage (ou « offset ») des composants. Les réglages des deux DAC s'effectuent de préférence par l'interface I2C lorsque le composant n'est pas en mode acquisition.

Les sorties des 32 portes ET 24 correspondant à chaque voie d'entrée du bloc 10 de filtrage et de mémorisation émettent sur autant de lignes des signaux de détection d'évènements physiques. Revenons à la **Fig. 5****,** chaque signal de sortie des portes ET 24 déclenche le basculement d'un élément mémoire indiquant qu'un événement à été reçu, cet élément mémoire étant par exemple une bascule D. L'état de cet élément mémoire revient à un état initial lors de la lecture de la mémoire correspondant à cette entrée. Les lignes de sorties des éléments mémoires des 32 voies d'entrée sont reliées aux 32 entrées de la porte OU 11. La sortie de cette porte 11 génère ainsi le signal de déclenchement d'un XTRACT, indiquant que sur l'une quelconque des entrées, une signal caractéristique d'un évènement physique a été détecté. Comme le montre la **Fig. 5****,** le signal de déclenchement est transmis au sein du circuit au générateur de rampe 12, et sort à l'extérieur du circuit XTRACT sur une broche spécifique.

### 5.5 Description du générateur de rampe

Le générateur de rampe 12 est un bloc connu en soi. Il permet de générer une rampe de montée en tension parfaitement linéaire, d'une durée de 10 microsecondes exactement pour le prototype réalisé. Dans le fonctionnement interne du circuit intégré XTRACT, la valeur de la tension extraite à un instant précis de la rampe représente une indication temporelle de cet instant précis. En d'autres termes, l'utilisation d'une rampe de tension assure une conversion temps-amplitude afin d'étiqueter en temps l'ordre d'arrivée des évènements.

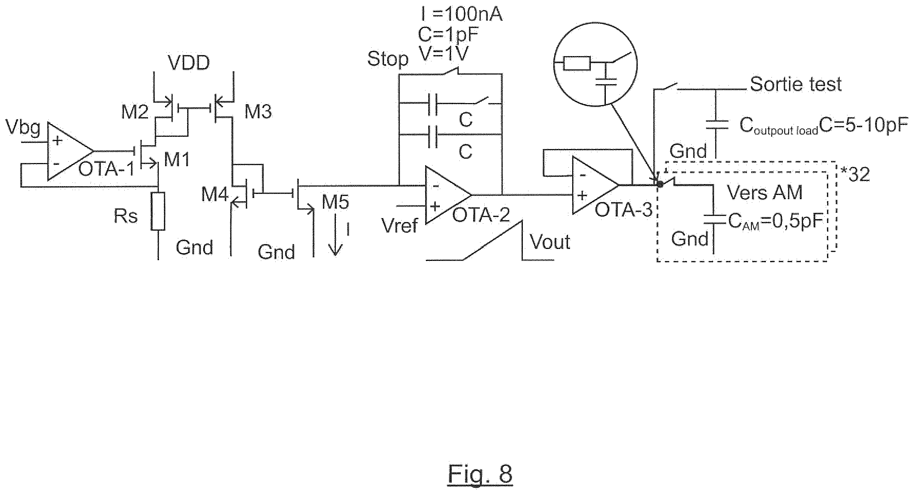

Au départ, la rampe est inactive et la tension générée est à 0. Le signal de déclenchement en sortie de la porte OU 11, démarre la rampe. Ce premier événement intervient donc à l'instant T0. Si d'autres évènements interviennent au cours de cette rampe et tant que sa tension n'atteint pas son niveau maximum, les autres évènements sont datés par rapport au premier événement. Le schéma bloc du générateur de rampe utilisé pour la réalisation du prototype d'EXTRACT est illustré à la **Fig. 8****,** et est donné qu'à titre d'exemple, d'autres montages permettent de fournir le même résultat.

Le générateur de rampe 12 est composé de 3 amplificateurs opérationnels et de 5 transistors MOS qui permettent de réaliser les fonctions suivantes :
OTA_1 : ce premier amplificateur produit un courant fixe de 1 µA dans la résistance Rs à partir d'une tension de type Band-Gap de 1.2V.
Rs : Cet élément résistif est constitué de deux résistances ayant des coefficients de température inverses dans le but d'obtenir une résistance stable en température,
M1,2,3,4,5 : ces quatre transistors MOS réalisent une division par 10 du courant qui circule dans l'élément résistif Rs,
OTA_2 : ce second amplificateur intégre le courant de 100 nA (issu de la division par 10 du courant de 1 µA) dans une capacité de 1 pF. La pente de la rampe ainsi générée est alors de 100 mV/µs. Une seconde capacité en série avec un interrupteur permet de diviser par 2 la pente de la rampe,
OTA_3 : ce troisième amplificateur constitue un buffer qui permet de piloter les mémoires analogiques.

Un réseau RC (ayant par exemple comme valeurs : 2 kΩ et 3 pF) est inséré entre la sortie de l'OTA_3 et chaque entrée de chacune des mémoires analogiques. Ces réseaux RC filtrent certains signaux de façon à minimiser les perturbations sur la rampe lors des commutations de circuits s'exécutant au sein des mémoires analogiques. De cette façon, une commutation qui s'effectue sur un circuit CFD associé à une voie d'entrée, ne perturbe pas les 31 autres circuits CFD. Ce réseau RC est visible dans le médaillon circulaire sur ce schéma bloc.

### 5.6 Description des mémoires analogiques

Comme on vient de le décrire précédemment, le bloc CFD génère un signal de détection indiquant qu'un événement physique est détecté, et l'information temporelle indiquant l'instant de cet événement est fournie par la valeur de la tension d'une rampe.

Des mémoires analogiques intégrées dans le bloc CFD permettent de stocker les deux valeurs des signaux analogiques associés à un événement physique à savoir :
- l'amplitude du signal détecté par le CFD,
- l'instant lui correspondant qui est donné par le signal de la rampe analogique.

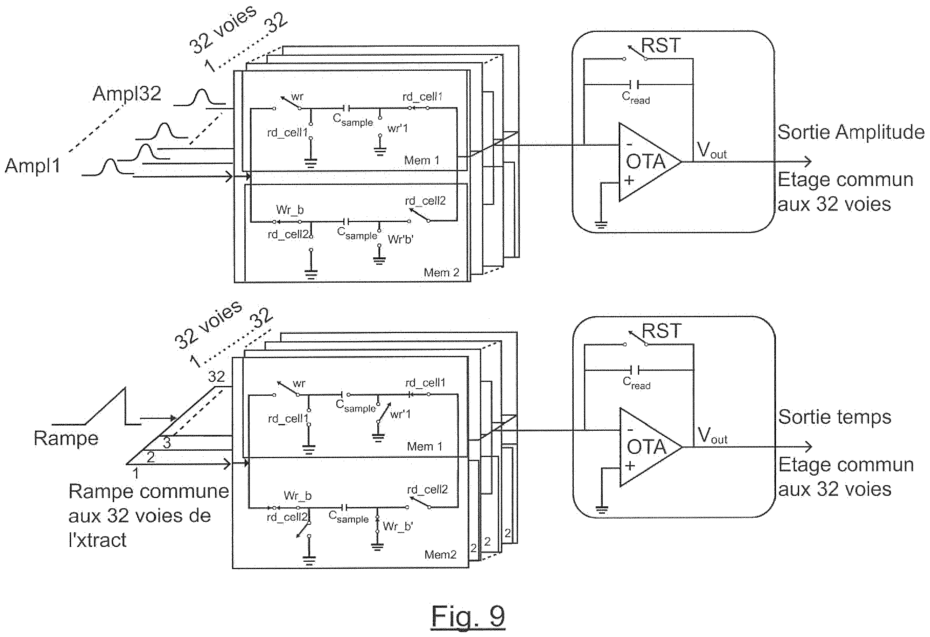

La **Fig. 9** illustre l'architecture retenue pour l'implémentation du bloc mémoires analogiques. Chaque voie d'entrée du circuit XTRACT comporte un bloc mémoire composé de deux mémoires séparées (appelée « Amplitude » ou « A » en abrégé et « Temps » ou « T » en abrégé) de structure identique. Chaque mémoire est constituée de deux sous-mémoires qui fonctionnent en complémentarité : quand la sous-mémoire Mem2 est en mode d'écriture (interrupteur wr_b fermé), la sous-mémoire Mem1 est en attente et garde en mémoire l'information en tension précédemment acquise (interrupteur wr_b ouvert). De cette manière, la tension mémorisée dans la mémoire peut être maintenue pendant un temps indéterminé jusqu'à sa lecture en vue de la conversion en numérique à l'extérieur du circuit EXTRACT.

Comme on peut le voir en partie haute de la **Fig. 9****,** chacun des 32 signaux d'entrée fournis par les circuits IDEF-X est directement transmis en entrée des cellules mémoire Amplitude. Ces mémoires A sont destinées à mémoriser la tension présente à l'entrée correspondante au moment de la détection de l'événement détecté sur cette entrée. Les mémoires Temps reçoivent quant à elles, le signal de la rampe commune à toutes les voies d'entrée du composant. Ces mémoires T sont destinées à mémoriser sous forme d'une tension l'information temporelle de l'instant où un événement physique est détecté sur une entrée.

Un seul événement peut être mémorisé par rampe et par voie. Le temps d'une rampe étant de 10 microsecondes, un circuit EXTRACT est capable de traiter et de fournir des valeurs de 32 x 100.000 = 3,2.10⁶ évènements physiques reçus par seconde ce qui est largement suffisant compte tenu des radiations émises dans le cadre d'une imagerie 3y.

### 5.7 Les étages de sortie des mémoires Analogiques

Les sorties des 32 portes ET correspondant à chaque voie d'entrée du bloc 10 de filtrage et de mémorisation émettent sur autant de lignes des signaux de détection d'évènements physiques. Comme le montre la **Fig. 5****,** ces 32 sorties sont reliées au circuit ATBM 13. Ce circuit réalise la gestion des données analogiques et permet leurs lectures à partir des mémoires vers les circuits de conversion. Le bloc ATBM est une structure de type 'arbre' contrôlée de manière asynchrone et ne possédant pas d'horloge interne. Il gère l'arrivée des signaux de détection reçus par les 32 voies, et encode le numéro de voies d'entrée pour fournir une adresse sur 5 bits. Cette valeur d'adresse fait partie des données qui sont transmises par le circuit. Si un événement physique affecte plusieurs entrées d'un même EXTRACT, plusieurs signaux de détection sont activés au même moment et le bloc ATBM en est informé. Il mémorise alors l'arrivée des signaux de détection et les numéros des voies d'entrées concernées. Lors de la lecture d'un circuit EXTRACT, les mémoires contenant encore de l'information sont lues les unes après les autres. Lorsqu'une mémoire est lue, elle est mise à zéro par la fermeture de l'interrupteur RST visible à droite sur la **Fig. 9****.**

Afin de minimiser le nombre de connexions électriques entre les 640 circuits EXTRACT et les circuits de l'étage suivant (les cartes PU 5), les 32 sorties analogiques des mémoires de type A et T sont lues par un étage de lecture commun. En d'autres termes, chaque valeur de type Amplitude ou Temps est lue à l'extérieur du XTRACT sur une seule ligne, et ceci quel que soit la voie d'entrée qui a détecté un événement Pour cela, le circuit XTRACT est doté de deux multiplexeurs 14 et 15 à 32 entrées et une sortie permettant de ne sélectionner la sortie que d'une seule mémoire A et d'une seule mémoire T, et de présenter les tensions mémorisées sur deux broches de sortie du circuit XTRACT.

Dans le prototype réalisé, une carte PU gère 8 circuits intégrés XTRACT et est capable de le lire et de convertir les données provenant de 256 détecteurs. Le signal de déclenchement est transmis d'un EXTRACT vers une carte PU 5, qui est ainsi informé que des données relatives à un événement sont disponibles et du moment précis à partir duquel la rampe a démarré. La carte PU émet alors vers le XTRACT une requête en lecture des données d'évènements. Cette requête de lecture met en oeuvre plusieurs lignes de communication entre la carte PU et l'EXTRACT sélectionné, ces lignes transmettent une information de lecture, une information de sélection d'un EXTRACT (un « Chip Select » parmi plusieurs) et un signal d'horloge pour cadencer l'émission des données analogiques. Dans le prototype réalisé, l'horloge est cadencée à 3 Mhz. A la réception du signal de lecture, le bloc ATBM de l'EXTRACT active les interrupteurs permettant de présenter successivement les données suivantes sur les lignes de sortie du composant :
- Amplitude du signal d'entrée mémorisé,
- Temps mémorisé sous la forme d'une valeur de tension de la rampe,
- Code (sur 5 bits) de la voie d'entrée.

La carte PU n'a pas la connaissance du nombre d'événements actuellement mémorisés et non lus au sein du circuit XTRACT. Le bloc ATBM présente successivement les valeurs sur les lignes de sortie en les cadençant à l'aide des signaux d'horloge reçus. Rappelons que le circuit EXTRACT ne possède pas d'horloge en fonctionnement lors de la phase acquisition pour ne pas générer d'interférences.

La présentation successive des données est possible grâce à un système de multiplexage qui consiste à sélectionner une seule voie de mémoire à lire à la fois. L'étage de sortie est un intégrateur constitué d'un amplificateur de type OTA (de l'Anglo-saxon : « Operational Transconductance Amplifiers » ) avec une capacité en contre réaction (Cread). Cet amplificateur est visible à droite de la **Fig. 9****,** un pour l'amplitude et l'autre pour le temps. Un interrupteur est mis en parallèle avec le condensateur Cread pour sa remise à zéro après chaque phase de lecture afin d'éviter tout empilement de tension. Tous les signaux de commande des interrupteurs sont générés par le bloc ATBM dédié au contrôle de la lecture et de la réinitialisation des mémoires analogiques.

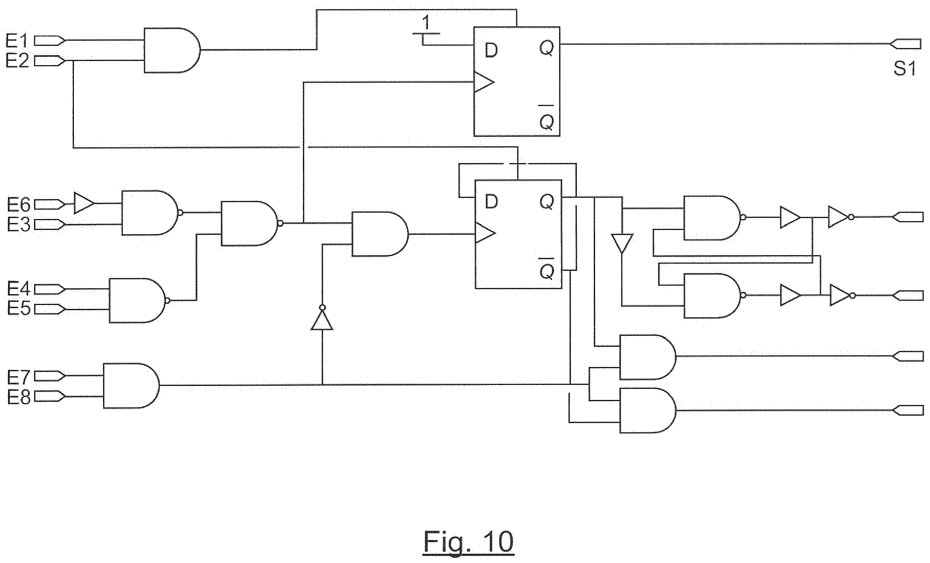

Le fonctionnement électronique de la lecture de la mémoire repose sur le principe de transfert de charge entre la capacité d'échantillonnage Csample et la capacité du maintien ou de lecture Cread. La technique du « bottom plate sampling » a été utilisée pour réduire la non-linéarité qui est induite par l'injection de charges pour différentes amplitudes du signal à échantillonner. Pour ce faire, un interrupteur de taille minimale a été inséré entre l'armature inférieure de Csample et la masse virtuelle (tension de la baseline) et est ouvert légèrement avant (1 ns) le switch qui relie le signal d'entrée à l'armature supérieure de la même capacité Csample. Ce léger déphasage est généré à l'aide d'un mini-bloc de logique combinatoire inséré dans chaque cellule mémoire. Ce mini-bloc représenté par la **Fig.10** contrôle également le mode d'écriture et de lecture des deux sous-mémoires Mem1 et Mem2 par les signaux WR_cell et RD_cell) et fournit le signal D_flag indiquant que la voie a été lue et que la mémoire peut être utilisée pour une nouvelle acquisition. L'ATBM émet un signal vers l'entrée notée E1 sur cette figure et appelée « D_rest_flag » pour remettre la cellule mémoire en mode acquisition après avoir lu celle-ci. Le signal appelé « D_Reset » sur l'entrée notée E2 est commun à toutes les cellules mémoires et provient de l'extérieur. Il permet une remise à zéro complète du circuit intégré. Ces deux entrées affectent directement la sortie S1 appelée « D_Flag » indiquant que la cellule mémoire a été lue et ne dispose plus de données à lire.

Le signal de détection émis par le bloc CFD est transmis à l'entrée appelée « CFD » et notée E3, ce signal déclenche la mémorisation des niveaux analogiques dans les mémoires de l'entrée associée. Le signal E4 appelée « D_mask » sélectionne des voies que l'on souhaite caractériser, le signal E5 appelée « D_Trig_in » permet de mémoriser le signal d'entrée sans passer par le CFD et le signal E6 appelé « Veto » permet d'inhiber toutes les entrées en provenance des blocs CFD. Ces trois entrées E4, E5 et E6 sont utilisées en phase caractérisation du circuit.

L'entrée notée E7 sur cette figure et appelée « D_rd » reçoit un ordre de lecture des cellules mémoire provenant d'une carte PU 5. L'ATBM émet un signal vers l'entrée notée E8 et appelée « D_atbm » pour sélectionner une voie d'entrée et ainsi lire les cellules mémoires associées. Lorsque les signaux d'entrée présents sur D_atbm et D_rd sont actifs, les tensions mémorisées dans les cellules mémoire sont alors disponibles sur le port de sortie.

Ce bloc permet également d'assurer la testabilité des mémoires analogiques.

A chaque requête de lecture des données, la carte PU décide de lire un circuit XTRACT qui a émis un signal de déclenchement, elle sélectionne d'abord ce circuit en activant la ligne de sélection (« Chip Select ») correspondant. Les sept autres circuits XTRACT non sélectionnés présentent leurs sorties en haute impédance pour ne pas perturber la transmission des informations émises par le huitième. A la réception de ce signal, l'ATBM de l'EXTRACT sélectionne et active des interrupteurs dans le circuit qui permettent au circuit de « prendre la main » sur le bus commun à 8 circuits. Ensuite la carte PU envoie un signal de lecture (Read), et un signal d'horloge à 3MHz qui est reçu par le bloc ATBM. A chaque front d'horloge du signal Read, le bloc ATBM programme les deux multiplexeurs de façon à sélectionner les mémoires des voies d'entrée ayant générées des signaux de détection d'événement. L'ATBM lit l'état de la ligne de sortie D_Flag de chacun des 32 mini-blocs afin de déterminer les mémoires à lire et celles qui n'ont pas d'information à délivrer. Les tensions mémorisées dans les mémoires A et T sont alors appliquées sur les deux lignes de sortie analogique, et le PU peut les lire et les convertir en numérique. On prendra soin d'utiliser des convertisseurs AD ayant des temps de conversion inférieurs à la fréquence d'horloge de lecture. Lorsque toutes les voies ont été lues, tous les signaux provenant des éléments mémorisant l'état lu/non-lu des mémoires analogique sont à « 0 » et de ce fait la sortie de la porte OU 11 retombe automatiquement à « 0 ». La carte PU détecte que le signal de déclenchement n'est plus actif et comprenant que le circuit est « vide », désactive alors le signal de sélection de l'EXTRACT et peut lire un autre composant.

Pendant toute la durée d'acquisition, les cartes PU lisent les informations émises par les circuits EXTRACT et les transmettent à l'unité centrale 6 qui peut les traiter dès réception. L'image 3γ se construit pendant et après l'acquisition, et grâce au pré-traitement effectué par les circuits XTRACT, l'unité centrale peut fournir cette image 3y peu de temps après la phase d'acquisition.

Il doit être évident pour les personnes versées dans l'art que la présente invention permet des modes de réalisation sous de nombreuses autres formes spécifiques sans l'éloigner du domaine d'application de l'invention comme revendiqué. Le circuit intégré décrit peut notamment être utilisé pour détecter tout type de radiations notamment 3y, mais également gamma ou rayon X. Les présents modes de réalisation doivent être considérés à titre d'illustration mais peuvent être modifiés dans le domaine défini par la portée des revendications ci-après.

## Revendications

1. Circuit intégré (4) de détection de radiations recevant sur une pluralité de voies d'entrée des signaux analogiques provenant de détecteurs de radiations, **caractérisé en ce que** ledit circuit comporte pour chaque voie d'entrée un bloc de filtrage et de mémorisation (10) comparant l'amplitude du signal analogique en entrée avec une valeur analogique de référence et générant un signal de détection lorsque l'amplitude du signal en entrée sur la voie considérée dépasse la valeur de référence et que ledit signal en entrée passe par un extremum, et une pluralité de mémoires analogiques recevant en entrée une information temporelle indiquant l'instant de détection et mémorisant lors de la génération dudit signal de détection à la fois l'amplitude du signal analogique présent sur une voie d'entrée et ladite information temporelle indiquant l'instant de détection, le circuit intégré comportant en outre :
- un bloc de génération du signal de déclenchement (11) recevant les signaux de détection de l'ensemble des voies d'entrée et générant un signal de déclenchement lorsqu'au moins un signal de détection est généré,
- un générateur (12) d'un signal électrique dont la tension évolue en forme de rampe, ladite tension prise à l'instant de détection d'une radiation constituant l'information temporelle associée à cette radiation, le signal de génération de rampe étant transmis en entrée des mémoires analogiques associées à chaque voie d'entrée à travers un circuit RC, le signal de déclenchement étant transmis, au sein du circuit, au générateur de rampe (12) par le bloc de génération du signal de déclenchement (11), et
- un port de sortie émettant à l'extérieur dudit circuit intégré les signaux analogiques mémorisés et le signal de déclenchement.

2. Circuit intégré de détection de radiations selon la revendication 1, **caractérisé en ce que** le bloc de filtrage et de mémorisation, dit « circuit CFD » comporte notamment :
- un filtre à retard (20),
- un premier comparateur (22),
- un atténuateur à pont diviseur (23),
le signal provenant des détecteurs de radiations étant transmis à la fois au filtre de retard (20) pour produire un signal retardé et à l'atténuateur (23) pour produire un signal atténué, le signal retardé et le signal atténué étant transmis au premier comparateur qui produit un signal indiquant que la tension entre ces signaux électriques change de polarité, ledit signal étant utilisé pour produire le signal de détection.

3. Circuit intégré de détection de radiations selon la revendication 2, **caractérisé en ce que** ledit circuit CFD comporte un second comparateur (21) qui compare la tension émise par un détecteur de radiations à une tension de référence, le circuit CFD comportant également une porte ET (24) dont une entrée reçoit le signal émis par le premier comparateur (22), la porte ET émettant le signal de détection indiquant que la tension entre ces signaux électriques change de polarité et que la tension émise par les détecteurs est supérieure à la tension de référence.

4. Circuit intégré de détection de radiations selon la revendication 2 ou 3, **caractérisé en ce que** le filtre à retard (20) est constitué d'un filtre de Bessel du 2ème ordre avec un retard de 25 nanosecondes au minimum, 600 nanosecondes de préférence.

5. Circuit intégré de détection de radiations selon l'une quelconque des revendications précédentes, **caractérisé en ce qu'**il comporte un circuit dit « ATBM » comportant des éléments de mémorisation des signaux de détection et émettant sur le port de sortie et sous le contrôle de signaux de lecture reçus d'un circuit extérieur les signaux analogiques mémorisés des voies pour lesquelles une radiation est détectée.

6. Circuit intégré de détection de radiations selon l'une quelconque des revendications précédentes, **caractérisé en ce qu'**il comporte un premier multiplexeur recevant sur chaque entrée les signaux mémorisées d'amplitude du signal en entrée du circuit et un second multiplexeur recevant sur chaque entrée les signaux mémorisés d'information temporelle, les sorties des deux multiplexeurs émettant vers le port de sortie les signaux analogiques de l'amplitude et de l'information temporelle associée à une radiation détectée.

7. Appareil de production d'une image constituée de points représentatifs des positions d'émission de radiations émanant d'un volume donné, comportant une pluralité de détecteurs délivrant chacun un signal de mesure dont l'amplitude varie lors de la détection d'une radiation, des moyens de conversion analogique / numérique desdits signaux de mesure, et d'une unité centrale traitant les données converties pour produire une image représentant les points d'émission desdites radiations,
**caractérisé en ce qu'**il comporte une pluralité de circuits intégrés de détection de radiations selon l'une quelconque des revendications précédentes, les voies d'entrée desdits circuits intégrés étant connectées auxdits détecteurs, les signaux de déclenchement émis par lesdits circuits intégrés activant la conversion en numérique au sein desdits moyens de conversion des signaux analogiques mémorisés présents sur les ports de sorties.

8. Appareil de production d'une image selon la revendication 7, **caractérisé en ce qu'**il comporte une pluralité de circuits intégrés de détection de radiations 3γ émanant d'un volume donné et **en ce qu'**il produit une image 3γ.

## Patentansprüche

1. Integrierte Schaltung (4) zur Erkennung von Strahlungen, die auf einer Vielzahl von Eingangskanälen von Strahlungsdetektoren kommende analoge Signale empfängt, **dadurch gekennzeichnet, dass** die Schaltung für jeden Eingangskanal einen Filter- und Speicherblock (10), der die Amplitude des analogen Signals am Eingang mit einem analogen Bezugswert vergleicht und ein Erkennungssignal erzeugt, wenn die Amplitude des Signals am Eingang auf dem betrachteten Kanal den Bezugswert überschreitet und das Signal am Eingang durch einen Extremwert geht, und eine Vielzahl von analogen Speichern aufweist, die am Eingang eine den Erkennungszeitpunkt anzeigende zeitliche Information empfangen und bei der Generierung des Erkennungssignals gleichzeitig die Amplitude des auf einem Eingangskanal vorhandenen analogen Signals und die den Erkennungszeitpunkt anzeigende zeitliche Information speichern, wobei die integrierte Schaltung außerdem aufweist :
- einen Block zur Generierung des Auslösesignals (11), der die Erkennungssignale der Gesamtheit der Eingangskanäle empfängt und ein Auslösesignal generiert, wenn mindestens ein Erkennungssignal generiert wird,
- einen Generator (12) eines elektrischen Signals, dessen Spannung sich rampenförmig entwickelt, wobei die zum Zeitpunkt der Erkennung einer Strahlung gemessene Spannung die dieser Strahlung zugeordnete zeitliche Information bildet, wobei das Rampengenerierungssignal am Eingang der jedem Eingangskanal zugeordneten analogen Speicher über eine RC-Schaltung übertragen wird, wobei das Auslösesignal innerhalb der Schaltung vom Generierungsblock des Auslösesignals (11) an den Rampengenerator (12) übertragen wird, und
- einen Ausgangsport, der außerhalb der integrierten Schaltung die gespeicherten analogen Signale und das Auslösesignal sendet.

2. Integrierte Schaltung zur Strahlungserkennung nach Anspruch 1, **dadurch gekennzeichnet, dass** der Filter- und Speicherblock, "CFD-Schaltung" genannt, insbesondere aufweist:
- ein Verzögerungsfilter (20),
- einen ersten Komparator (22),
- ein Dämpfungsglied mit Teilerbrücke (23),
wobei das von den Strahlungsdetektoren kommende Signal gleichzeitig an das Verzögerungsfilter (20), um ein verzögertes Signal zu erzeugen, und an das Dämpfungsglied (23) übertragen wird, um ein gedämpftes Signal zu erzeugen, wobei das verzögerte Signal und das gedämpfte Signal an den ersten Komparator übertragen werden, der ein Signal erzeugt, das anzeigt, dass die Spannung zwischen diesen elektrischen Signalen die Polarität ändert, wobei das Signal verwendet wird, um das Erkennungssignal zu erzeugen.

3. Integrierte Schaltung zur Strahlungserkennung nach Anspruch 2, **dadurch gekennzeichnet, dass** die CFD-Schaltung einen zweiten Komparator (21) aufweist, der die von einem Strahlungsdetektor abgegebene Spannung mit einer Bezugsspannung vergleicht, wobei die CFD-Schaltung ebenfalls ein UND-Glied (24) aufweist, von dem ein Eingang das vom ersten Komparator (22) gesendete Signal empfängt, wobei das UND-Glied das Erkennungssignal sendet, das anzeigt, dass die Spannung zwischen diesen elektrischen Signalen die Polarität ändert, und dass die von den Detektoren abgegebene Spannung höher ist als die Bezugsspannung.

4. Integrierte Schaltung zur Strahlungserkennung nach Anspruch 2 oder 3, **dadurch gekennzeichnet, dass** das Verzögerungsfilter (20) aus einem Bessel-Filter zweiter Ordnung mit einer Verzögerung von mindestens 25 Nanosekunden, vorzugsweise 600 Nanosekunden, besteht.

5. Integrierte Schaltung zur Strahlungserkennung nach einem der vorhergehenden Ansprüche, **dadurch gekennzeichnet, dass** sie eine so genannte "ATBM"-Schaltung aufweist, die Speicherelemente der Erkennungssignale aufweist und auf dem Ausgangsport und unter der Kontrolle von von einer externen Schaltung empfangenen Lesesignalen die gespeicherten analogen Signale der Kanäle sendet, für die eine Strahlung erkannt wird.

6. Integrierte Schaltung zur Strahlungserkennung nach einem der vorhergehenden Ansprüche, **dadurch gekennzeichnet, dass** sie einen ersten Multiplexer, der auf jedem Eingang die gespeicherten Signale der Amplitude des Signals am Eingang der Schaltung empfängt, und einen zweiten Multiplexer aufweist, der auf jedem Eingang die gespeicherten Signale zeitlicher Information empfängt, wobei die Ausgänge der zwei Multiplexer an den Ausgangsport die analogen Signale der Amplitude und der einer erkannten Strahlung zugeordneten zeitlichen Information senden.

7. Gerät zur Erzeugung eines Bilds, das aus Punkten besteht, die für die Emissionspositionen von von einem gegebenen Volumen ausgehenden Strahlungen repräsentativ sind, das eine Vielzahl von Detektoren, die je ein Messsignal liefern, dessen Amplitude sich bei der Erkennung einer Strahlung ändert, Analog-Digital-Umwandlungseinrichtungen der Messsignale und eine Zentraleinheit aufweist, die die umgewandelten Daten verarbeitet, um ein Bild zu erzeugen, das die Emissionspunkte der Strahlungen darstellt,
**dadurch gekennzeichnet, dass** es eine Vielzahl von integrierten Schaltungen zur Strahlungserkennung nach einem der vorhergehenden Ansprüche aufweist, wobei die Eingangskanäle der integrierten Schaltungen mit den Detektoren verbunden sind, wobei die von den integrierten Schaltungen gesendeten Auslösesignale die Digital-Umwandlung innerhalb der Umwandlungseinrichtungen der gespeicherten analogen Signale aktivieren, die an den Ausgangsports vorhanden sind.

8. Gerät zur Erzeugung eines Bilds nach Anspruch 7, **dadurch gekennzeichnet, dass** es eine Vielzahl von integrierten Schaltungen zur Erkennung von Sy-Strahlungen aufweist, die von einem gegebenen Volumen ausgehen, und dass es ein 3y-Bild erzeugt.

## Claims

1. Radiation-detecting integrated circuit (4), receiving analogue signals coming from radiation detectors on a plurality of input channels, **characterized in that** said circuit comprises, for each input channel, a filtering and storage block (10) comparing the amplitude of the input analogue signal with a reference analogue value and generating a detection signal when the amplitude of the input signal on the channel under consideration exceeds the reference value and when said input signal passes through an extremum, and a plurality of analogue memories receiving, at input, time information indicating the detection time and storing, when said detection signal is generated, both the amplitude of the analogue signal present on an input channel and said time information indicating the detection time, the integrated circuit furthermore comprising:
- a trigger signal generation block (11), receiving the detection signals from all of the input channels and generating a trigger signal when at least one detection signal is generated,
- a generator (12) for generating an electrical signal the voltage of which changes in a ramp shape, said voltage taken at the time of detection of radiation constituting the time information associated with this radiation, the ramp generation signal being transmitted at input of the analogue memories associated with each input channel through an RC circuit, the trigger signal being transmitted, within the circuit, to the ramp generator (12) by the trigger signal generation block (11), and
- an output port outputting the stored analogue signals and the trigger signal to outside said integrated circuit.

2. Radiation-detecting integrated circuit according to Claim 1, **characterized in that** the filtering and storage block, called "CFD circuit", comprises in particular:
- a delay filter (20),
- a first comparator (22),
- a divider-bridge attenuator (23),
the signal coming from the radiation detectors being transmitted both to the delay filter (20) in order to produce a delayed signal and to the attenuator (23) in order to produce an attenuated signal, the delayed signal and the attenuated signal being transmitted to the first comparator, which produces a signal indicating that the voltage between these electrical signals changes polarity, said signal being used to produce the detection signal.

3. Radiation-detecting integrated circuit according to Claim 2, **characterized in that** said CFD circuit comprises a second comparator (21) that compares the voltage output by a radiation detector with a reference voltage, the CFD circuit also comprising an AND gate (24) an input of which receives the signal output by the first comparator (22), the AND gate outputting the detection signal indicating that the voltage between these electrical signals changes polarity and that the voltage output by the detectors is greater than the reference voltage.

4. Radiation-detecting integrated circuit according to Claim 2 or 3, **characterized in that** the delay filter (20) consists of a second-order Bessel filter with a delay of at least 25 nanoseconds, preferably 600 nanoseconds.

5. Radiation-detecting integrated circuit according to any one of the preceding claims, **characterized in that** it comprises what is known as an "ATBM" circuit comprising elements for storing the detection signals and outputting, on the output port and under the control of read signals received from an external circuit, the stored analogue signals for the channels for which radiation is detected.

6. Radiation-detecting integrated circuit according to any one of the preceding claims, **characterized in that** it comprises a first multiplexer receiving, on each input, the stored amplitude signals for the signal at input of the circuit and a second multiplexer receiving, on each input, the stored time information signals, the outputs of the two multiplexers outputting, to the output port, the analogue signals for the amplitude and the time information associated with detected radiation.

7. Device for producing an image consisting of points representative of positions of emission of radiation emanating from a given volume, comprising a plurality of detectors each delivering a measurement signal the amplitude of which varies when radiation is detected, means for the analogue-to-digital conversion of said measurement signals, and a central processing unit processing the converted data so as to produce an image representing the points of emission of said radiation, **characterized in that** it comprises a plurality of radiation-detecting integrated circuits according to any one of the preceding claims, the input channels of said integrated circuits being connected to said detectors, the trigger signals output by said integrated circuits activating the conversion to digital, within said conversion means, of the stored analogue signals present on the output ports.

8. Device for producing an image according to Claim 7, **characterized in that** it comprises a plurality of radiation-detecting integrated circuits for detecting 3γ radiation emanating from a given volume and **in that** it produces a 3γ image.
